**Europäisches Patentamt**

**European Patent Office**

**Office européen des brevets**

(11) Numéro de publication : **0 487 464 A2**

# (12) DEMANDE DE BREVET EUROPEEN

(21) Numéro de dépôt : **91830480.9**

(22) Date de dépôt : **06.11.91**

(51) Int. Cl.⁵ : **H01Q 1/32,** H01Q 3/02, G01S 13/93

(30) Priorité : **22.11.90 IT 953290**

(43) Date de publication de la demande : **27.05.92 Bulletin 92/22**

(84) Etats contractants désignés : **DE FR GB IT SE**

(71) Demandeur : **SMA SEGNALAMENTOMARITTIMO ED AEREO S.P.A. Via del Ferrone, 5 I-50124 Firenze (IT)**

(72) Inventeur : **Lombardi, Piero Via Giovanni del Pian dei Carpini, 96/3 I-50127 Firenze (IT)** Inventeur : **Rossettini, Alessandro Via Maffei, 38 I-50133 Firenze (IT)**

(74) Mandataire : **Martini, Lazzaro Ufficio Brevetti Ing. Lazzaro Martini Via dei Rustici 5 I-50122 Firenze (IT)**

(54) Détecteur radar pour véhicule destiné à des applications à courte distance.

(57) Détecteur radar pour véhicule destiné à des applications à courte distance avec une antenne (1) soumise à un balayage mécanique et un émetteur-récepteur (2) de signal impulsionnel à une longueur d'onde millimétrique, dans lequel ladite antenne (1) est à réseau plan de type moulé ; ledit émetteur-récepteur (2) forme un ensemble rigide et inséparable avec l'antenne (1) et il est constitué par un oscillateur à deux fréquences piloté et par des moyens pour effectuer une conversion hétérodyne du signal en réception ; l'ensemble antenne-émetteur-récepteur (1,2) est supporté par un élément moulé (3) qui est soumis à un balayage mécanique à l'intérieur d'un logement avec radome (6) destiné à être fixé sur le véhicule ; et comprenant un module de restitution angulaire (5) de type opto-électronique pour détecter l'angle de pointage de l'antenne et son sens de rotation. En particulier, ledit émetteur-récepteur (2) transmet le signal impulsionnel avec cycle de répétition faible et il est maintenu activé pendant la période de réception des échos radar jusqu'à la distance maximum concernée.

Fig. 1

**EP 0 487 464 A2**

La présente invention concerne un détecteur radar, à installer sur des moyens mobiles, pour des applications à courte distance (inférieure à 500 m), spécialement de type anticollision, destiné en particulier à des véhicules automobiles.

On connaît l'utilisation du radar à micro-ondes dans des dispositifs anticollision pour véhicules.

Les premières solutions connues ont été caractérisées par l'emploi d'un faisceau fixe dans la direction de l'axe du véhicule, mais elles présentaient toutes le grave inconvénient consistant à générer un signal à partir duquel il n'était pas possible de reconstruire correctement la géométrie de la scène située en face du véhicule et à provoquer de fausses alarmes dues à la détection d'objets ne concernant pas la trajectoire du véhicule.

Certaines solutions connues proposées successivement ont permis de relever également, en plus de la distance et de la vitesse relative des obstacles situés en face du véhicule, leur position angulaire par rapport à l'axe de celui-ci.

Certaines de ces solutions connues utilisent deux antennes qui recoivent et extrapolent la position angulaire de l'obstacle grâce au déphasage existant entre les signaux reçus.

D'autres solutions connues utilisent des fréquences multiples pour varier l'angle de diffusion maximum d'une paire d'antennes émettrices.

Enfin, d'autres solutions connues utilisent plusieurs antennes fixes émettrices et réceptrices, avec lesquelles on génère simultanément plusieurs faisceaux de micro-ondes destinés à couvrir des secteurs angulaires adjacents correspondants.

Toutes ces solutions connues présentent d'importantes limites de discrimination géométrique et de nombreux cas d'ambigu té dans la détermination de la position des obstacles.

En partant de ces considérations, dans le but d'obtenir une image radar avec une discrimination angulaire suffisante, il para t nécessaire de n'utiliser qu'un seul faisceau étroit avec balayage continu ou à pas finis.

D'autre part, le balayage en fréquence au moyen d'une antenne à réseau, pour obtenir une bonne définition angulaire, une bonne discrimination en distance et un angle de balayage suffisamment large, présente l'inconvénient de nécessiter des bandes de fréquence de fonctionnement extrêmement larges (quelques GHz), ce qui entra ne des difficultés aussi bien au niveau de la fabrication que de l'attribution de bande.

Pour ce qui concerne le balayage en phase au moyen d'une antenne à réseau, celui-ci présente l'inconvénient de ne pas permettre la réalisation, à des coûts acceptables, d'un appareil fonctionnant dans une bande de fréquence avec une antenne d'encombrement suffisamment réduit pour pouvoir être installée sur un véhicule tout en maintenant la discrimination angulaire désirée.

Par ailleurs, le balayage mécanique entra ne en soi une réalisation encombrante, complexe et coûteuse en raison des masses en jeu et, en outre, des pertes élevées dans le parcours en fréquence radio de connexion avec l'antenne.

Pour éviter ces pertes et réduire les masses en mouvement, on a proposé en particulier des antennes du type Cassegrain avec l'élément rayonnant fixe et solidaire de l'émetteur-récepteur et avec un réflecteur soumis à un balayage, mais ce type de solution présente une criticité considérable au niveau des tolérances mécaniques et du montage et des limites de performances dues à la dégradation du faisceau rayonnant pour des angles de balayage relativement élevés.

Il est connu que des encombrements réduits peuvent être obtenus avec des antennes à guides d'onde à fentes, mais ces antennes sont lourdes, spécialement si elles comportent le déplacement de l'émetteur-récepteur, et elles nécessitent entre autre une précision d'usinage très élevée.

La présente invention a pour but d'obtenir un détecteur radar, à installer sur des moyens mobiles, pour des applications à courte distance, spécialement du type anticollision, destiné en particulier à des véhicules automobiles, qui élimine les inconvénients précités.

Ce résultat a été atteint conformément à l'invention en adoptant l'idée d'utiliser un détecteur radar comprenant une antenne soumise à un balayage mécanique et un émetteur-récepteur de signal impulsionnel à une longueur d'onde millimétrique et caractérisé en ce que l'antenne est à réseau plan de type moulé; que l'émetteur-récepteur forme un ensemble rigide et inséparable avec l'antenne et qu'il consiste en un circuit intégré avec un oscillateur à deux fréquences piloté et avec des moyens destinés à effectuer une conversion hétérodyne du signal en réception; que le balayage concerne l'ensemble antenne-émetteur-récepteur; et en ce qu'il comprend un module de restitution angulaire de type opto-électronique, qui fournit l'angle de pointage du faisceau d'antenne et son sens de rotation.

Selon une autre caractéristique de l'invention, les impulsions radar sont émises avec cycle de répétition faible et l'oscillateur est désactivé au terme de l'intervalle de réception de l'écho radar de l'obstacle qui se trouve en deça de la distance maximum prédéterminée qui concerne la détection et réasctivé immédiatement avant l'émission.

Les avantages obtenus grâce à la présente invention consistent essentiellement en ce que:

– l'ensemble antenne-émetteur-récepteur possède une inertie réduite, un encombrement très limité et il est applicable avantageusement sur n'importe quel véhicule de manière que le faisceau émis ne rencontre jamais d'obstacle pendant tout le balayage;

– l'utilisation d'une antenne à réseau de type moulé, associée à l'utilisation d'un seul oscillateur pour la transmission et la génération de la fréquence hétérodyne, permet de limiter sensiblement les coûts de fabrication;

– l'intégration entre l'antenne et l'émetteur-récepteur minimise les pertes de parcours;

– l'ensemble antenne-émetteur-récepteur, du fait qu'il est logé dans un support moulé, procure une grande rigidité et une résistance élevée aux contraintes mécaniques, y compris aux vibrations transmises par le véhicule en mouvement;

– l'entra nement en mouvement de l'ensemble antenne-émetteur-récepteur à vitesse angulaire constante est obtenu avec des moyens mécaniques simples, de montage facile et de grande fiabilité;

– le module de restitution angulaire permet de déterminer avec une grande précision la direction de pointage de l'antenne sans avoir à recourir à des systèmes complexes d'asservissement de celle-ci;

– la transmission d'un signal impulsionnel à une longueur d'onde millimétrique permet d'utiliser une antenne d'encombrement extrêmement réduit avec une discrimination angulaire optimale pour l'application proposée;

– la désactivation de l'oscillateur à l'intérieur de l'intervalle de temps pendant lequel il n'y a pas de signaux d'écho intéressants entra ne une faible dissipation de puissance, ce qui permet d'éviter l'utilisation de dissipateurs;

– les signaux d'alimentation et de contrôle de l'émetteur-récepteur et ceux d'écho détectés sont générés et traités respectivement à l'extérieur du détecteur à l'aide de moyens simples et de connaissance commune, tels qu'une unité de contrôle et de traitement reliée au moyen d'un câblage blindé.

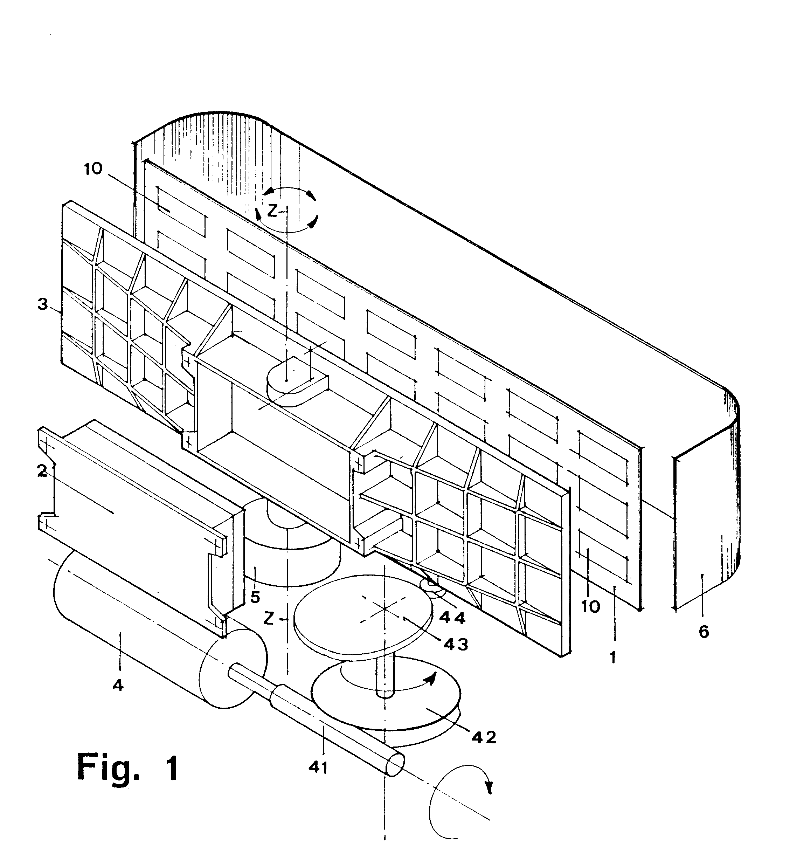

Ces avantages et caractéristiques de l'invention ainsi que d'autres seront plus et mieux compris de chaque homme du métier à la lumière de la description qui va suivre et à l'aide des dessins annexés donnés à titre d'exemplification pratique de l'invention, mais à ne pas considérer dans le sens limitatif; dessins sur lesquels: la FIG. 1 représente une vue d'ensemble, partiellement éclatée, d'un détecteur radar conformément à l'invention; la FIG. 2 représente un bloc-diagramme du système émetteur-récepteur-antenne; la FIG. 3 représente un diagramme de temps des trois signaux de déclenchement pour la mise en marche $F_{ac}$ la modulation $F_{mo}$ et la commande de fréquence $F_{fr}$.

Réduit à sa structure essentielle et en référence aux dessins annexés, un détecteur radar pour véhicule pour des applications à courte distance conformément à l'invention est constitué:

(a) - d'une antenne 1 à réseau plan du type moulé, constitué par un circuit à microbande (microstrip) pour l'alimentation d'éléments (patch) 10 rayonnants en un faisceau étroit de l'ordre de un ou deux degrés d'angle azimutal et de quelques degrés d'angle d'élévation;

(b) - d'un émetteur-récepteur 2 à ondes millimétriques, placé en contact direct avec la face arrière de l'antenne 1 et rendu solidaire de celle-ci au moyen d'une connexion par soudure entre la piste de connexion de l'émetteur-récepteur et le centre du circuit d'alimentation de l'antenne et comprenant:

– un oscillateur à deux fréquences piloté, conçu pour produire de manière séquentielle la fréquence $F_0$ de transmission et celle $F_0 - F_1$ nécessaire au mixage, requis pour la conversion hétérodyne, en phase de réception;

– un coupleur directif pour le prélèvement du signal d'hétérodyne;

– un commutateur rapide pour la formation de l'impulsion de transmission, d'une durée de l'ordre d'une dizaine de nanosecondes;

– un mélangeur dans lequel, par battement entre le signal d'écho radar et celui à la fréquence $F_0 - F_1$, est généré un signal à une fréquence intermédiaire $F_i$;

– un amplificateur qui fournit le signal de sortie pour le traitement successif;

(c) - d'un élément moulé 3 de support de l'ensemble antenne-émetteur-récepteur 1,2, qui est logé dans une enveloppe de logement, non représenté sur le dessin pour des raisons de simplification, et muni de moyens, par exemple deux pivots placés sur l'axe de rotation Z dudit ensemble, pour permettre le balayage horizontal: ladite enveloppe devant être fixée de manière appropriée sur le véhicule et étant équipée d'un radome 6 en matériau à faible perte dans le champ des ondes millimétriques et avec une extension et une forme appropriées pour ne pas dégrader le faisceau aux angles maximaux du balayage;

(d) - de moyens d'entra nement en mouvement mécanique de l'ensemble antenne-émetteur-récepteur 1,2 avec un micromoteur 4 à courant continu, un motoréducteur à vis sans fin 41 et roue 42 à dents hélico dales, une came 43, calée sur l'arbre de ladite roue 42, un rouleau 44 monté solidaire, fou sur le support 3 précité et maintenu en contact avec le profil actif de ladite came 43. Avantageusement, le profil de ladite came 43 est réalisé de manière telle à imposer audit ensemble 1,2 un mouvement alternatif à loi trapézo dale, autour de l'axe Z, avec la portion linéaire, c'est-à-dire à vitesse angulaire constante, à l'intérieur de l'angle de balayage utile;

(e) - d'un module de restitution angulaire 5 avec un codeur optique de type incrémentiel, qui fournit une impulsion de référence, suivant l'axe longitudinal du véhicule, et l'indication du sens de rotation de l'antenne: ledit codeur étant calé sur l'axe Z de rotation de l'antenne ou, de manière plus avantageuse, avec le disque rotatif ménagé sur le support 3 de l'ensemble antenne-émetteur-récepteur 1,2 et solidaire avec ses pivots de rotation.

Conformément à l'invention, ledit émetteur-récepteur est constitué par un circuit hybride à ondes millimétriques, qui utilise comme structure de guide d'ondes une microbande ou bien un guide d'ondes à ruban (stripline) symétrique, réalisée par métallisation (par exemple photolithographie) d'une couche mince de diélectrique avec des composants actifs intégrés (MIC) éventuellement de type monolithe (MMIC).

Avantageusement, ledit émetteur-récepteur 2 est constitué d'un unique circuit intégré de type monolithe.

Dans une autre forme de réalisation préférée, l'ensemble antenne-émetteur-récepteur 1,2 est réalisé sur un unique substrat par exemple par photogravure ou accroissement par dépôt.

Conformément à l'invention, il est prévu d'exclure la transmission du signal à proximité des points morts, c'est-à-dire d'effectuer la transmission pendant le mouvement à vitesse angulaire constante de l'ensemble antenne-émetteur-récepteur, de manière à permettre une cadence des impulsion pratiquement constante et en évitant ainsi une augmentation de densité du signal dans des secteurs particuliers et en obtenant une image homogène de l'espace environnant.

Avantageusement, ladite cadence n'est pas parfaitement constante du fait que l'on fait varier volontairement la période de répétition des impulsions suivant une loi pseudo-aléatoire cyclique qui permet de minimiser la probabilité d'interférence mutuelle entre plusieurs radars opérant dans la même zone: le cycle de variation étant plus court que la période nécessaire pour couvrir un angle égal à la largeur du lobe principal d'antenne, la puissance rayonnée par cette dernière résulte pratiquement constante avec la direction de pointage.

Ci-après est décrit un mode de fonctionnement possible d'un détecteur radar selon l'invention. Une fois les alimentations activées, dérivées de l'alimentation principale du véhicule par l'intermédiaire d'une unité externe de traitement et de contrôle, le micromoteur 4 commence à tourner en continu et le mécanisme de transmission vis-roue 41,42 transmet le mouvement de balayage alternatif désiré à l'ensemble antenne-émetteur-récepteur. Simultanément, le module de restitution angulaire 5 commence également à transmettre les impulsions de position à l'unité de traitement et de contrôle.

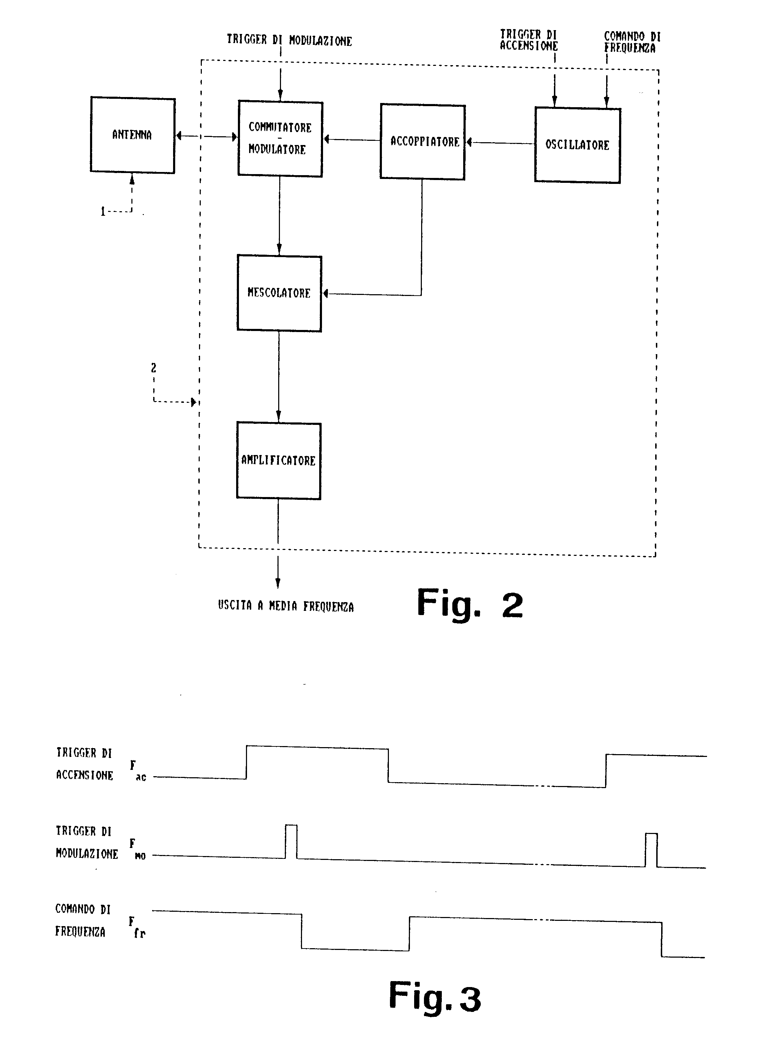

Dès que l'angle de pointage entre dans le champ utile, les impulsions de déclenchement pour l'émetteur-récepteur 2 sont habilitées et, comme on peut le voir sur la Fig. 3 des dessins annexés, il se produit ce qui suit:

– Mise en marche de l'oscillateur (signal $F_{ac}$ haut) avec commande de fréquence commutée sur la fréquence de transmission $F_0$ (signal $F_{fr}$ haut).

– Brève période d'attente t pour la stabilisation de l'amplitude et de la fréquence de l'oscillation à fréquence millimétrique.

– Activation du déclenchement de modulation $F_{mo}$ qui provoque la transmission de l'impulsion en RF (radiofréquence).

– Commutation de la fréquence de l'oscilloscope sur la fréquence d'hétérodyne $F_0$-$F_1$ (signal $F_{fr}$ bas).

– Maintien du fonctionnement de l'oscilloscope pour la réception des échos radar jusqu'à la distance intéressée maximale.

– Mise hors service de l'oscilloscope (signal $F_{ac}$ bas).

– Commutation de la commande de fréquence sur la fréquence de transmission $F_0$ (signal $F_{fr}$ haut).

– Maintien de la mise hors service de l'oscillateur dans l'attente de la mise en marche suivante et de la répétition du cycle.

La répétition du cycle de transmission-réception est effectuée jusqu'à ce qu'on atteigne l'autre extrémité du balayage, lorsque l'unité externe, à la suite de la lecture de l'angle de pointage sur la ligne du codeur, inhibe le déclenchement pour l'émetteur-récepteur.

Le signal d'écho radar, relatif à chaque impulsion transmise, est facilement synchronisable avec la donnée de pointage de l'antenne 1 et il est disponible pour la production des images et pour les traitements successifs.

## Revendications

1) Détecteur radar pour véhicule pour des applications à courte distance avec une antenne (1) soumise à un balayage mécanique et un émetteur-récepteur (2) de signal impulsionnel à une longueur d'onde millimétrique, caractérisé en ce que ladite antenne (1) est à réseau plan de type moulé; en ce que ledit émetteur-récepteur (2) forme un ensemble rigide et inséparable avec l'antenne (1) et qu'il est constitué par un oscillateur à deux fréquences piloté et par des moyens pour effectuer une conversion hétérodyne du signal en réception; en ce que l'ensemble antenne-émetteur-récepteur (1,2) est supporté par un élément moulé (3) qui est soumis à un balayage mécanique à l'intérieur d'un logement avec radome (6) destiné à être fixé sur le véhicule; et en ce qu'il comprend un module de restitution angulaire (5) de type opto-électronique pour détecter l'angle de pointage de l'antenne et son sens de rotation.

2) Détecteur radar selon la revendication 1, caractérisé en ce que ladite antenne (1) est constituée par un circuit à microbande pour l'alimentation d'éléments (10) rayonnants en un faisceau étroit de l'ordre de un ou deux degrés d'angle azimutal et de quelques degrés d'angle d'élévation.

3) Détecteur radar selon la revendication 1, caractérisé en ce que ledit émetteur-récepteur (2) est constitué par un circuit hybride, réalisé par métallisation d'une couche mince de diélectrique avec des composants actifs intégrés, éventuellement de type monolithe, et avec une structure de guide d'ondes une microbande ou bien un guide d'ondes à ruban symétrique.

4) Détecteur radar selon la revendication 1, caractérisé en ce que ledit émetteur-récepteur (2) est constitué d'un unique circuit intégré de type monolithe.

5) Détecteur radar selon une ou plusieurs des revendications précédentes, caractérisé en ce que l'émetteur-récepteur (2) forme un ensemble rigide et inséparable avec l'antenne (1) au moyen d'une connexion par soudure entre la piste de connexion de l'émetteur-récepteur et le centre du circuit d'alimentation de l'antenne.

6) Détecteur radar selon la revendication 1, caractérisé en ce que ledit ensemble antenne-émetteur-récepteur (1,2) est réalisé sur un unique substrat par photogravure ou accroissement par dépôt.

7) Détecteur radar selon la revendication 1, caractérisé en ce que ledit ensemble antenne-émetteur-récepteur (1,2) dérive son mouvement de balayage à partir d'un moteur électrique à courant continu (4) avec interposition d'un motoréducteur et de moyens aptes à transformer le mouvement rotatoire uniforme en mouvement rotatoire alternatif.

8) Détecteur radar selon la revendication 7, caractérisé en ce que lesdits moyens de transformation du mouvement sont constitués par une came (43) ou par un excentrique, solidaires de l'arbre de sortie du motoréducteur, et par un rouleau (44) monté solidaire, fou sur ledit support (3) de l'ensemble antenne-émetteur-récepteur (1,2) et maintenu en contact avec le profil actif de ladite came (43); le profil de ladite came (43) étant réalisé de manière telle à imposer audit ensemble (1,2) un mouvement alternatif à loi trapézoïdale, autour de l'axe Z, avec la portion linéaire, c'est-à-dire à vitesse angulaire constante, à l'intérieur de l'angle de balayage utile.

9) Détecteur radar selon la revendication 1, caractérisé en ce que ledit module de restitution angulaire (5) est constitué par un codeur optique de type incrémentiel.

10) Détecteur radar selon les revendications 1 à 9, caractérisé en ce que le disque rotatif dudit codeur est réalisé sur le support (3) de l'ensemble antenne-émetteur-récepteur (1,2).

11) Détecteur radar pour véhicule pour des applications à courte distance avec une antenne (1) soumise à un balayage mécanique et un émetteur-récepteur (2) de signal impulsionnel à une longueur d'onde millimétrique, caractérisé en ce que ledit émetteur-récepteur (2) transmet le signal impulsionnel avec cycle de répétition faible et en ce qu'il est maintenu activé pendant la période de réception des échos radar jusqu'à la distance maximum intéressée.

12) Détecteur radar selon la revendication 1, caractérisé en ce que le signal impulsionnel est transmis pendant le balayage à vitesse angulaire constante et avec une cadence pseudo-aléatoire cyclique, apte à minimiser la probabilite d'interférence mutuelle entre plusieurs radars opérant dans la même zone.

**Fig. 1**

TRIGGER DI MODULAZIONE

TRIGGER DI
ACCENSIONE

COMANDO DI
FREQUENZA

ANTENNA

COMMUTATORE
-
MODULATORE

ACCOPPIATORE

OSCILLATORE

1- - - -

MESCOLATORE

2

AMPLIFICATORE

USCITA A MEDIA FREQUENZA

# Fig. 2

TRIGGER DI
ACCENSIONE $F_{ac}$

TRIGGER DI
MODULAZIONE $F_{mo}$

COMANDO DI
FREQUENZA $F_{fr}$

# Fig. 3